# EUROPEAN PATENT APPLICATION

(11) **EP 2 199 931 A1**
(43) Date of publication of application: **23.06.2010**
(21) Application number: 08254062.6
(22) Date of filing: 18.12.2008
(51) Int. Cl.: G06F 17/30

(54) **Content delivery system**

(71) Applicant: BRITISH TELECOMMUNICATIONS public limited company, London EC1A 7AJ (GB)
(72) Inventor: The designation of the inventor has not yet been filed
(74) Representative: Lidbetter, Timothy Guy Edwin

(57) **Abstract**

Data may be delivered to an end user 40 from a service platform 30 hosting the data in any of two or more different modes. The delivery mode to be used is selected in accordance with user-specific network connection parameters retrieved by the service platform 30 from a store 20. The data in the store relates to parameters such as available bandwidth, and is maintained by interrogation or testing of the connections between the network 10 and end user 40

## Description

This invention relates to content delivery systems in which one or more data distribution servers make data available to a number of users (subscribers) over a data communications system such as the Internet. For illustrative purposes, the invention will be described primarily in relation to the distribution of streamed data representing an audio or video file, but this should not be taken as limitative of the types of data or distribution system for which the invention is suitable.

In order to be accomplished in an acceptably short time, large data files require a data communications system with a high bit-rate. However, the nature of streamed data in particular is that the user can begin to use it before the data file has been transmitted in its entirety, as the data or audio file is designed to be played over a period of time (generally longer than the time necessary to deliver it) and the data is delivered in such a way that the early parts of the sequence can be played whilst the file is still incomplete. Thus the user can begin to watch or listen to the sequence before delivery is complete. The bit-rate can indeed be reduced to approximately that required to match the rate at which the programme is being viewed.

Compression techniques are used to reduce the overall bit-rate required to transmit a video or audio sequence. Some scenes can be compressed more readily than others without loss of quality, so the actual instantaneous bit-rate required to transmit a file can vary. Buffering is used to maintain a relatively steady transmission bit-rate throughout these variations, and a small (but variable) delay is necessary to allow for this.

In many communications networks, different end-users are able to connect to the network with different connection parameters such as maximum connection speed. Such connection parameters are determined by a number of factors, including the particular service and service parameters (e.g. maximum bandwidth, Class of Service (CoS) profiles/parameters etc.) the end-user has purchased from the service provider, and the conditions under which they connect to the network (e.g. the signal to noise ratio of their Digital Subscriber Line (DSL) connection). These conditions depend on a number of factors including the medium by which communication is made (wired connection, optical fibre, wireless), the distance of the user's terminal from the network distribution point, and the number of other users competing for resources (the "contention ratio"). Some of these factors vary over time.

This variation between different end-users can make it difficult to offer services that maximise the use of each end-user's available connection parameters. Instead services are conventionally designed to accommodate "the lowest common denominator", meaning that they can be made widely available but do not take advantage of capabilities such as higher speeds that may be available to some end-users. Many end-users are therefore offered a service which is sub-optimal for their connection.

For example, a video service provider may decide to offer online video encoded at 400 Kbps because that is a rate which most end-users' connections can support, even though a large number of end-users have a connection significantly faster than 400 Kbps.

However if a service were able to determine the connection parameters specific to a particular end-user, the service provider could tailor the service to that particular end-user. For example a video service could automatically determine the optimum encoding rate that can be supported to each end-user, and deliver a video to each end-user requesting it at that user's optimum rate. In another example, a video service could automatically determine whether theresource reservation control mechanisms known as "QoS" (quality of service) are supported to a particular end-user and decide to make use of it to reduce the amount of buffering required or otherwise increase the user experience of their service.

Some parameters can be obtained or inferred today through initial tests across the end-user's connection, although not all the available parameters are likely to be able to be obtained this way. Some services also offer two or more levels of provision, the user being expected to select the level appropriate to their connection. However, this requires some knowledge of the technical features of the connection, which less technically-aware users may not know. It is also unlikely to offer more than two or three choices - typically "dial-up" (56kb/s) or "broadband" (1 MB/sec or above).

According to a first aspect of the invention, there is provided a method of providing data on request to an end user from a service platform hosting the data, wherein the data may be delivered in any of two or more different modes, wherein on receipt of a request from an end user the service platform accesses service profile data specific to the user, and selects the delivery mode of the data in accordance with the user-specific profile data.

According to a second aspect, there is provided a service platform for hosting data for download to user terminals on demand, comprising a data server for receiving data requests from users and delivery data in response to such requests, characterised by the provision of a data adaptor for modifying the requested data for delivery in one of two or more different modes in accordance with user-specific profiles, and interrogation means for obtaining the user-specific profiles from a database.

According to a third aspect, there is provided a network connection parameters platform, comprising an input for receiving service profile data specific to each of a plurality of data users, and an output for delivering the user profile data to a service platform in response to a request for such data, and further comprising parameter-determination apparatus for identifying parameters of the connections available to one or more of the plurality of network data users to determine the parameters for the user-specific data.

The platform may perform a test on the user connection, or may interrogate an existing database, for example the DSLAM (broadband equipment in an exchange) holds data on the speed at which each DSL line is running, and can be interrogated for that data by the network connection parameters system.

The data may be bandwidth or other network characteristics, or a simple identification of the products or services available to the end users.

The user request to be made to the server may be modified in accordance with the user-specific profile data, or the data generated by the server in response to the user request may itself be modified in accordance with the user-specific profile data.

The user-specific data may include any data that may affect the capability of the service to deliver data, such as the maximum connection speed capable of attainment by the connection between the service platform and the user terminal, or whether the QoS resource reservation control parameters are supported to the end-user, etc.

Preferably, the service profile data is stored in a network connection parameters platform, and the network connection parameters platform performs a test on the network connection to the user to determine the parameters for the user-specific data. The test may be a simple interrogation to determine what product the user has bought). The tests may be performed by a polling system triggered in response to a request for data made to the service platform by the end user, or it may be performed periodically, such that it initiates a connection test to each user terminal in turn to determine the parameters for the user-specific data.

An embodiment of the invention will now be described by way of example, with reference to the drawings in which
Figure 1 depicts the various systems which co-operate to perform the invention.
Figure 2 depicts in more detail the functional elements of the network connection parameters system depicted in Figure 1
Figures 3 and 4 depict in more detail the functional elements of two embodiments of the service platform depicted in Figure 1
Figure 5 depicts the information flows between the elements depicted in Figures 1 and 2 that take place during the performance of the data capture phase of the invention
Figure 6 depicts the information flows between the elements depicted in Figures 1, 2 and 3 that take place during the performance of the content delivery phase of the invention
Figure 7 depicts the information flows between the elements depicted in Figures 1, 2 and 4 that take place during the performance of the content delivery phase of the invention

In this description the service provided is a video streaming service, but this should not be taken as limitative, and the invention could equally apply to other services. Similarly, this embodiment uses connection speed as an example of a network connection parameter but other parameters may be useful to expose to services as well, either singly or in combination. The service may be delivered over a single network, or by some interconnected combination of networks.

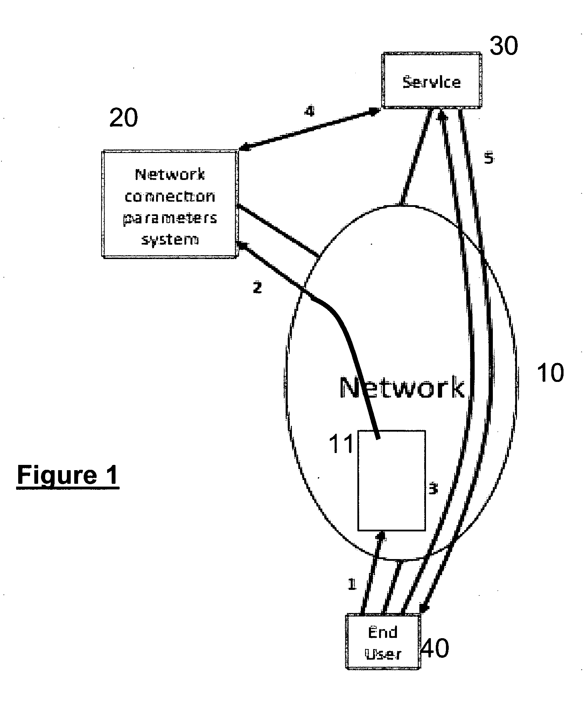

Figure 1 depicts a data communications network 10 interconnecting a number of communications devices, of which three are shown. These are an end user 40, a service platform 30, and an associated connection parameters platform 20. In practice it will be understood that there will be many different end users, and many service platforms, some of which may be associated with a network connection parameters system. Several service platforms may be associated with the same network connection parameters system.

The end user's terminal apparatus 40 is largely conventional, consisting typically of a general purpose computer connected to the network 10 through a modem.

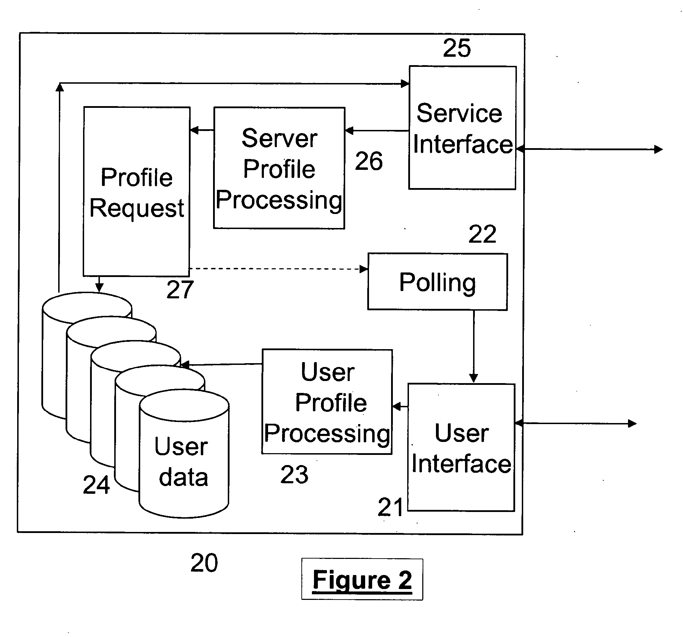

As shown in Figure 2, the connection parameters platform 20 comprises two interface units 21, 25 which communicate respectively with users 40 and service platforms 30. These interface units 21, 25 may both be connected to the public data communications network 10. Alternatively there may be dedicated links between the interface unit 25 and one, some, or all of the service platforms 30.

The user interface 21 is used to obtain connection parameters relating to each end user 10. These may be obtained initially, and then updated periodically, in response to a polling system 22 requesting the parameters from the relevant network components and systems. An update request may also be made in response to a request for data, as depicted by the dashed line in Figure 2.

Alternatively, the parameters could be 'pushed' into the network connection parameters system by the relevant network components and systems in real-time in response to changes in the end users' connection parameters such as a DSL line retraining to a different speed. There may be a data processing function 23 to extract the required data from that received, and to convert it in a standard form for storage, before being forwarded to a data repository 24.

The service interface 25 receives queries from service platforms 30 in order to obtain the network connection parameters stored in the database 24 relating to a specific end user 40. These inputs may require processing to identify the data available in the repository and the form in which the service platform requires it. A formatted request is then generated (27) and the network connection parameters can be returned to the interface 25 in response to the query.

If the service platforms 30 can process the data parameters received at the user interface 21 in their raw form (e.g. connection speed), the processors 23, 26 may be unnecessary. However, some form of processing (either on a single raw parameter or on a combination of raw parameters) may be required in order to deliver the processed result. The exact nature of the processing, and in particular whether it is required before storage (user profile processing, 23) or in delivering data to the servers (server profile processing, 26), or both, will depend on the parameters being stored/processed, what the desired output parameter represents, and the degree of standardisation that exists in the user systems 10 and server systems 30..

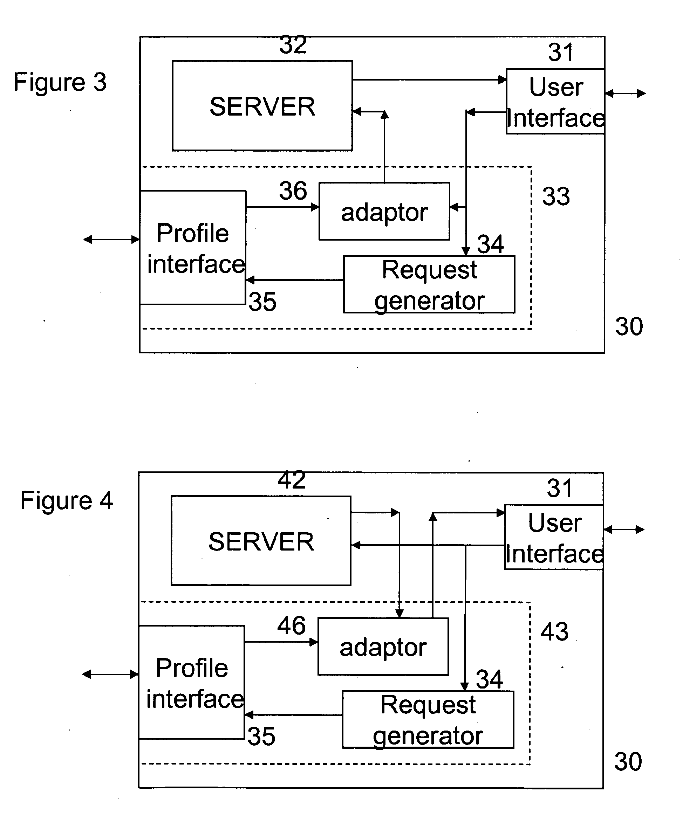

The service platform 30 may be anything that can make use of the network connection parameters of an end user 10. The invention could apply to a wide range of services including existing services. Figures 3 and 4 depict two embodiments in which additional elements 33, 43 are provided to an existing service platform 30, 31, 32 so that it queries the network connection parameters system 20 and makes use of the results.

The existing service platform comprises a server platform 32 and a user interface 31 by which user requests are delivered to the platform 32 and requested content or other interactive services are returned to the user 40 over the Internet 10 or some other data communications connection.

The modification 33 comprises a request generator 34 which intercepts the requests delivered to the user interface 31 and generates a user profile request for delivery through a second interface 35 to the user profile database 20. As already discussed with reference to Figure 2, this second interface unit 35 may be connected to the same public data communications network 10 to which the user interface 31 is connected, but alternatively there may be a dedicated link to the user profile platform 20.

Data from the user profile platform 20 is received at the profile interface 35 and used by an adaptor processor 36 to modify the instructions to be delivered to the server 32. As shown in Figure 3, the user request is modified before being delivered to the server 32 itself. Figure 4 depicts an alternative modification 43 to the service platform 30 in which the data output from a server 42 is modified before delivery to the user interface 31. The functions of the adaptor 46 are modified accordingly, but the other functions 34, 35 are similar to those of Figure 3. In appropriate cases both pre-processing 33 and post-processing 43 may be required. New servers may also be developed which incorporate these functions as an integral part of their processing.

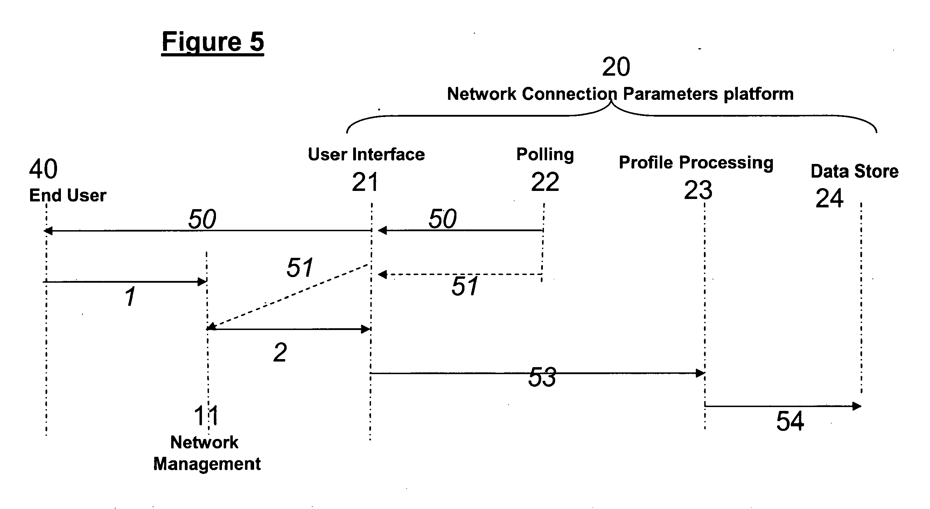

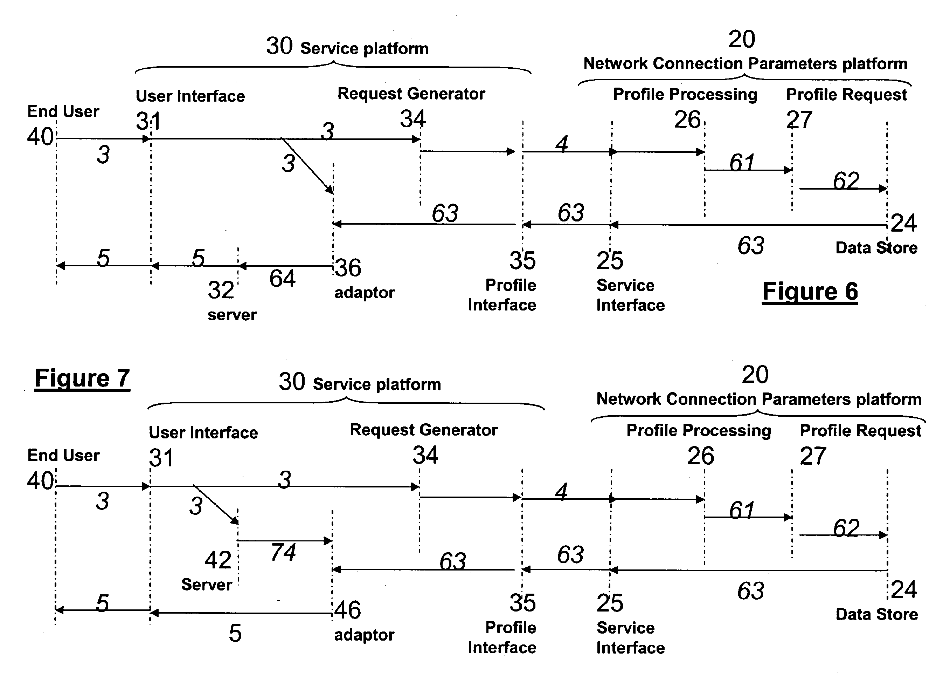

The operation of the system is illustrated in Figure 5, which shows the data flows in the information capture phase, and Figures 6 and 7, which show the data flows during the download itself, for the two different embodiments.

Each end-user 40 is assigned an identification code that the service platform 30 can discover (or be told) in order to be able to query the service connection parameters system 20. In the case of an IP (Internet Protocol) network this could be the end-user's IP address, which is delivered to the service platform 30 with any request for data, so that the service platform can address the requested data to the end-user 10 requesting it.

As shown in Figure 5, the operation of the system may be initiated when a user terminal 40 first connects to the network 10 (step 1). The network management system 11 responsible for establishing the connection is alerted (step 51) and identifies parameters associated with that end-user's network connection 10, such as product parameters, physical parameters etc.). Parameters that could be collected include (but are not limited to) things like the End-user's connection speed and what quality of service (QoS) profiles are supported by the network and the end-user's network connection. This bandwidth may be limited for technical reasons, or it may be restricted artificially to provide a distinction between different levels of service having different subscription rates. The IP address is also allocated on first connection.

This data is delivered to the Network connection parameters system 20 (step 2), where it is received at the user interface 21, any necessary pre-storage processing is performed by the profile processing unit 23 (step 53) and the data is then stored in the data store 24 (step 54)

Updates to the data may be prompted in response to a polling signal 50, 51 generated by a polling system 22 in the network connection parameters system 20. Such a signal 50 may be transmitted to the user terminal 40 being polled, causing it to transmit a signal 1 to the network management system 11 such that it repeats the download process 2 described above. Alternatively a polling signal 51 may be sent direct to the network management system 11 to cause a download 2 without the involvement of the terminal.

Subsequently, as depicted in Figures 6 and 7, whenever a user 40 connects to the service platform 30, for example by requesting a video, the user's input 3 is picked up by the user interface 31 of the service platform 30.

As shown in Figures 3 and 6, the user input 3 is passed to an adaptor unit 36. The user input 3 is also passed to a request generator 34 which transmits a request 4 to the Network connection parameters system 20, through the profile interface 35, for the network parameters specific to the user 40. This request is picked up by the service interface 25 of the connection parameters system 20, and processed by the processor 26 and, using those parameters, determines what subset of the available services (or the optimum service) to offer or deliver to the specified end-user 40. For example, in the case of a video service the parameters obtained could be used by the service to determine what encoding rate to use or whether to make use of QoS mechanisms to deliver the service to the End-user.

This data 61 is supplied to the profile request generator 27 which interrogates the data base 24 (step 62) in order to deliver the required profile data 63 to the service provider 30 by way of the service interface 25 and profile interface 35 in the respective platforms 20, 30. This profile data 63 is then delivered to the adaptor 36. The adaptor 36 modifies the original request in the user input 3 to generate a modified request 64 to the server 32.

In the alternative embodiment of Figures 4 and 7, the user input 3 is delivered to the server 42 and it is the output 74 from that server which is modified by an adaptor processor 46 according to the data retrieved from the network connection parameters system 20.

In either case, when the appropriate parameters have been determined for provision of a service, the service platform 30 delivers that service 5 to the end-user 40 by way of the user interface 35 and the network 10.

Although as shown the service platform 30 could obtain the network parameters through querying the network connection parameters system 20 in real-time, in response to a request being made, it may instead obtain the parameters in advance, essentially storing a local copy of the user data 24. The operation of this system would be similar except that the retrieval steps 4, 61, 62, 63 would take place periodically, instead of in response to a specific download request 3, to acquire data from the database 24 for storing locally to the service platform 30, and the request generator 34 would co-operate with this local copy of the database 24. The choice of which approach is preferred will depend on the exact parameters stored and how rapidly they change as real-time queries are likely to place higher demand on the network connection parameters system but will result in the service platform 30 being provided with the most up to date information on the end-user's network connection parameters.

The service platform may also use service-specific parameters to further determine the type of service to be delivered. For example, there may be different service levels agreed between the service operator and the different users. Consequently a user 40 paying for a premium service may be delivered the optimum service that his connection can support, whilst a lower-paying customer would be delivered service only at whatever level is available after the premium customers have been served. Note, however, that low bandwidth requirements on the part of the premium rate user, or low capabilities on the premium rate user's connection, may result in the low-paying customer being able to take advantage of a higher bandwidth than the premium customer is using, if the premium customer cannot, or does not need to, use the maximum available.

## Claims

1. A method of providing data on request to an end user from a service platform hosting the data, wherein the data may be delivered in any of two or more different modes, wherein on receipt of a request from an end user the service platform accesses service profile data specific to the user, and selects the delivery mode of the data in accordance with the user-specific profile data.

2. A method according to claim 1, wherein the user request made to the service platform is modified in accordance with the user-specific profile data.

3. A method according to claim 1 or claim 2, wherein the data generated by the service platform in response to the user request is modified in accordance with the user-specific profile data.

4. A method according to any preceding claim, wherein the user-specific data includes the maximum connection speed capable of attainment by the connection between the service platform and the user terminal.

5. A method according to any preceding claim, wherein the service profile data is stored in a network connection parameters platform, and the network connection parameters platform obtains data relating to the network connection to the user to determine the parameters for the user-specific data.

6. A method according to claim 5, wherein a test of the network connection is performed in response to a request for data made to the service platform by the end user.

7. A method according to claim 5 or claim 6, wherein the test is performed periodically.

8. A service platform for hosting data for download to user terminals on demand, comprising a data server for receiving data requests from users and delivery data in response to such requests,
**characterised by** the provision of a data adaptor for modifying the requested data for delivery in one of two or more different modes in accordance with user-specific profiles, and interrogation means for obtaining the user-specific profiles from a database.

9. A service platform according to claim 8, wherein the data adaptor is configured to modify data requests to be made to the server in accordance with the user-specific profile data.

10. A service platform according to claim 8 or claim 9, wherein the data adaptor is configured to modify the data generated by the server in accordance with the user-specific profile data.

11. A network connection parameters platform, comprising an input for receiving service profile data specific to each of a plurality of data users, and an output for delivering the user profile data to a service platform in response to a request for such data, and further comprising parameter-determination apparatus for identifying parameters of the connections available to one or more of the plurality of network data users to determine the parameters for the user-specific data.

12. A network connection parameters platform according to claim 11, wherein the parameter determination apparatus comprises testing apparatus for initiating a test of one or more of the connection available to one or more of the plurality of network data users to determine the parameters for the user-specific data.

13. A network connection parameters platform according to claim 12, comprising a polling system for initiating a connection test to determine the parameters for the user-specific data.

14. A network connection parameters platform according to claim 13, wherein the polling system is responsive to a request for data relating to one of the user terminals such that it initiates a connection test to that user terminal to determine the parameters for the user-specific data.
